# EUROPÄISCHE PATENTSCHRIFT

(11) **EP 0 638 694 B1**
(45) Veröffentlichungstag und Bekanntmachung des Hinweises auf die Patenterteilung: **28.06.2000**
(21) Anmeldenummer: 94112092.5
(22) Anmeldetag: 03.08.1994
(51) Int. Cl.: E04B 9/18, E04B 1/38, F16L 3/24

(54) **Abhängeranker für Doppel T-Träger**
Suspension anchor for T-profiles
Ancre de suspension pour profilés en double T

(30) Priorität: 13.08.1993 DE 4327169
(43) Veröffentlichungstag der Anmeldung: 15.02.1995
(73) Patentinhaber: Richter-System GmbH & Co. KG, 64347 Griesheim (DE)
(72) Erfinder: Knauf, Alfons Jean, D-65189 Wiesbaden (DE)
(74) Vertreter: Katscher, Helmut, Dipl.-Ing.

(56) Entgegenhaltungen:
- DE-C- 257 988
- DE-U- 8 605 411
- FR-A- 2 508 079
- US-A- 1 144 593
- US-A- 2 562 562

## Beschreibung

Die Erfindung betrifft einen Abhängeranker nach dem Oberbegriff des Patentanspruchs 1.

Doppel-T-Träger werden insbesondere in der Ausführung als Weitspannträger beim Innenausbau, und dort insbesonders auch bei abgehängten Unterdecken als tragende Bauteile verwendet. Im Gegensatz zu gewalzten Doppel-T-Trägern, die im Stahlbau Verwendung finden, bestehen die für den Innenausbau als Weitspannträger verwendeten, leichten Doppel-T-Träger aus zwei U-Profilschienen aus Blech, die an ihren senkrecht stehenden Stegflächen miteinander verbunden sind.

Zu diesem Zweck werden die Doppel-T-Träger von einer Rohdecke oder einer anderen Tragkonstruktion abgehängt; sie können auch selbst die Funktion einer tragenden Konstruktion für andere Bauteile übernehmen. In beiden Fällen müssen in die Doppel-T-Träger senkrechte Kräfte eingeleitet werden. Hierzu können zwischen die beiden Stegflächen nach oben und/oder unten vorstehende Ankerlaschen eingesetzt und verschraubt oder vernietet werden. Dies ist verhältnismäßig arbeitsaufwendig und hat zur Folge, daß die beiden Stegflächen zumindest an dieser Stelle nicht unmittelbar miteinander verbunden sind. Außerdem ist eine Verlagerung der Kraftangriffsstelle in Trägerlängsrichtung sehr aufwendig oder sogar unmöglich.

Stattdessen ist es auch bekannt, aus Flachmaterial einen Abhängeranker zu biegen, der mit seinen beiden Enden die freien Kanten der waagerechten Profilflansche hakenartig umgreift und in seinem mittleren Bereich mit einer Hängeöse oder einem ähnlichen Befestigungselement versehen ist. Diese Abhängeranker sind jedoch nicht zur Aufnahme größerer Kräfte geeignet, weil sie durch diese auf Biegung beansprucht werden und dann die Gefahr besteht, daß sich die Ankerhaken aufbiegen, da diese flächig an den Profilflanschen anliegen.

Bei einem bekannten Abhängeranker (US-A-1 144 593) bestehen die sich quer zur Tragerlängsachse erstreckenden Ankerplatten aus aneinanderliegenden gelochten Blechstreifen; jeweils am Streifenende ist eine Blechlasche als Ankersteg abgewinkelt, der in ein Loch des jeweils anderen Blechstreifens eingreift. Als Krafteinleitungselement greift ein senkrechtes Blechband durch aufeinanderliegende Löcher der beiden Blechstreifen.

Dieser bekannte Abhängeranker ist nur zur Aufnahme verhältnismäßig geringer Lasten und daher nicht zum Abhängen einer Unterdecke geeignet, weil der gesamte zweiteilige Abhängeranker sich im wesentlichen nur in einer einzigen Ebene erstreckt. Bei erhöhter Belastung besteht die Gefahr, daß die flachen Ankerhälften seitlich ausknicken. Der statische Zustand des zusammengesetzten Abhängerankers wird daher mit zunehmender Belastung instabiler.

Ein bekannter Klemmhaken (US-A-2 562 562) ist als U-förmiger Bügel um ein zu befestigendes Rohr gelegt; seine beiden hakenförmigen Bügelschenkel greifen hinter einen Profilflansch eines U- oder Winkelprofils, gegen den das Rohr gedrückt wird.

Bei einem bekannten Abhängeranker (DE-U-86 05 411) mit den Merkmalen des Oberbegriffs des Anspruchs 1 sind die beiden bei horizontalem Querschnitt U-förmigen Ankerhälften durch eine unter dem Doppel-T-Träger und quer dazu verlaufende Schiene miteinander verbunden, die eine Führung für die beiden Ankerhälften bildet und nach einer Seite verlängert ist, um ein Auflager für Rohre und ähnliche Teile zu bilden. Zur Festlegung der als Klemmbacken ausgeführten Ankerhaken sind an den Ankerhälften Sperr-Blattfedern befestigt, die sich mit Reibschluß an der Schiene abstützen.

Aufgabe der Erfindung ist es daher, einen Abhängeranker der Gattung nach dem Oberbegriff des Anspruchs 1 zu schaffen, dessen Ankerhälften sich bei Einleitung höherer senkrechter Kräfte zunehmend stabilisieren.

Diese Aufgabe wird gemäß der Erfindung mit den Merkmalen des Anspruchs 1 gelöst. Hierbei stabilisieren sich die beiden Ankerhälften schon durch die gemeinsame Einleitung der senkrechten Kraft und werden durch diese Verbindung in ihrer vorgegebenen Lage sicher gehalten. Eine gegenseitige Abstützung der beiden Ankerhälften in Trägerlängsrichtung ist nicht erforderlich.

Gemäß einer Ausgestaltung der Erfindung ist vorgesehen, daß aus jedem Ankersteg jeweils eine Verriegelungslasche herausgebogen ist, die in eine Verriegelungsausnehmung des jeweils anderen Ankerstegs formschlüssig eingreift. Dadurch wird schon bei der Montage und noch unabhängig von der angreifenden senkrechten Kraft eine formschlüssige, sichere Verbindung der beiden Ankerhälften erreicht. Der so zusammengesetzte, noch unbelastete Abhängeranker kann entlang dem Doppel-T-Träger verschoben werden und stabilisiert sich dann durch die angreifende senkrechte Kraft.

Es versteht sich, daß dieser Abhängeranker sowohl an den unteren Profilflanschen als auch an den oberen Profilflanschen des Doppel-T-Trägers angebracht werden kann, je nachdem ob eine senkrechte Kraft von oben oder von unten eingeleitet werden muß, d.h. zum Abhängen des einen Weitspannträger bildenden Doppel-T-Trägers von einer Rohdecke oder einer sonstigen Tragkonstruktion oder zum Anhängen einer Last, beispielsweise des Traggerippes einer Unterdecke an den Weitspannträger.

Weitere vorteilhafte Ausgestaltungen der Erfindung sind Gegenstand weiterer abhängiger Patentansprüche.

Die Erfindung wird nachfolgend an Ausführungsbeispielen näher erläutert, die in der Zeichnung dargestellt sind.

Es zeigt:
Fig. 1 einen Abhängeranker einer ersten Ausführungsform von einem Doppel-T-Träger,
Fig. 2 eine Ankerhälfte des Abhängerankers nach Fig. 1 in einer Seitenansicht,
Fig. 3 die Ankerhälfte nach Fig. 2 im Grundriß,
Fig. 4 die Ankerhälfte nach Fig. 2 in einer Ansicht in Richtung des Pfeiles IV,
Fig. 5 eine Verwendungsmöglichkeit der Ankerhälften gemäß den Figuren 1 bis 4 zur Anbringung an einer einfachen U-Profilschiene,
Fig. 6 eine zweite Ausführungsform eines Abhängerankers in einer Ansicht ähnlich der Fig. 1,
Fig. 7 eine Draufsicht in Richtung des Pfeiles VII in Fig. 6,
Fig. 8 eine der beiden Ankerhälften des Abhängerankers nach Fig. 6 und 7 in einer Seitenansicht,
Fig. 9 die Ankerhälfte nach Fig. 8 in einer Ansicht in Richtung des Pfeiles IX und
Fig. 10 einen Schnitt längs der Linie X-X in Fig. 9.

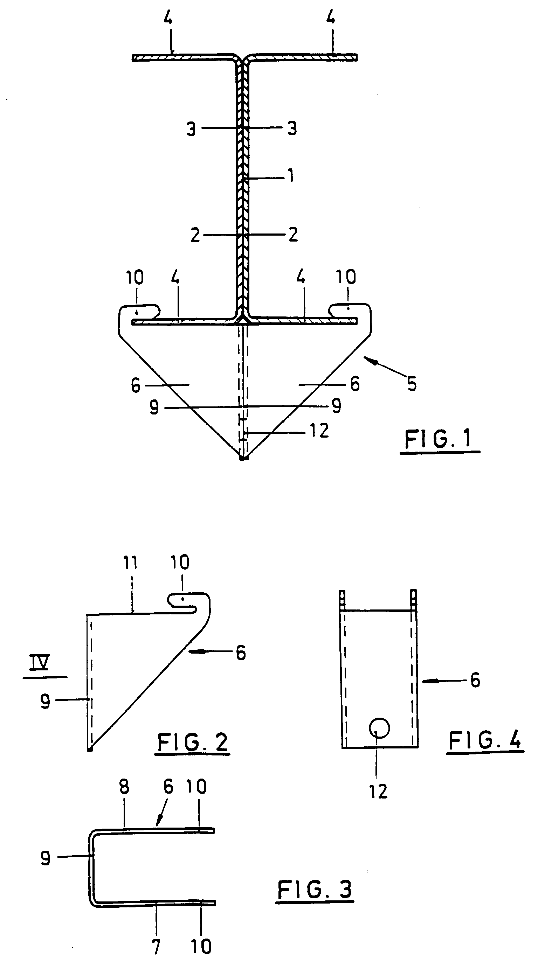

In Fig. 1 ist im Schnitt ein Doppel-T-Träger 1 gezeigt, der als Weitspannträger für eine abgehängte Unterdecke dient. Der Doppel-T-Träger 1 besteht aus zwei U-Profilschienen 2, die jeweils eine Stegfläche 3 und obere und untere waagerechte Profilflansche 4 aufweisen. Die U-Profilschienen sind Blech- bzw. Walzprofile.

Ein Abhängeranker 5 ist an der Unterseite des Doppel-T-Trägers 1 angebracht und dient dazu, eine senkrechte Kraft in den Doppel-T-Träger einzuleiten, beispielsweise aus einem mit einem Traggerippe der Unterdecke verbundenen (nicht dargestellten) Abhänger.

Der Abhängeranker 5 besteht aus zwei aus Blech geformten Ankerhälften 6. Wie man insbesondere aus den Fig. 2 bis 4 erkennt, ist jede Ankerhälfte 6 in Grundriß (Fig. 3) U-förmig gestaltet und weist eine sich quer zur Trägerlängsachse erstreckende erste Ankerplatte 7 und eine parallel und im Abstand dazu angeordnete zweite Ankerplatte 8 auf, die angenähert aie Gestalt eines rechtwinkligen Dreiecks haben. Von ihrer senkrechten Plattenkante ist ein gemeinsamer senkrechter Ankersteg 9 abgewinkelt.

An ihren oberen äußeren Eck ist jede Ankerplatte 7, 8 mit eine Ankerhaken 10 versehen, der die freie Kante des waagerechten Profilflansches 4 umgreift. Die waagerechte Plattenkante 11 liegt an der Außenseite des Profilflansches 4 an, wie man aus Fig. 1 erkennt.

Beim Ausführungsbeispiel nach Fig. 1 liegen die beiden senkrechten Ankerstege 9 der beiden Ankerhälften 6 aneinander an und weisen an ihrem vom Doppel-T-Träger 1 abgekehrten Ende (unten in Fig. 1) jeweils miteinander fluchtende Befestigungsbohrungen 12 auf, an denen ein (nicht dargestelltes) Krafteinleitungselement zur Einleitung einer senkrechten Hängerkraft angreift. Dieser gemeinsame Kraftangriff, der beispielsweise von einer Verschraubung übernommen wird, genügt zur Verbindung und Stabilisierung der beiden Ankerhälften 6.

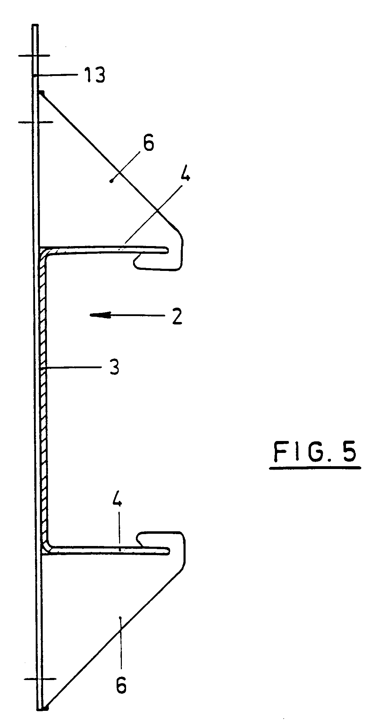

Als Beispiels für die universelle Einsetzbarkeit der in den Fig. 2 bis 4 gezeigten Ankerhälften 6 ist in Fig. 5 dargestellt, daß diese beiden Ankerhälften 6 auch an einem einzelnen, mit senkrechter Stegfläche 3 angeordneten U-Profil 2 sowohl am oberen als auch am unteren Profilflansch 4 angesetzt werden können. Die beiden Ankerhälften 6 werden mit einer gemeinsamen senkrechten Traglasche 13 verbunden, beispielsweise verschraubt, an der auch die senkrechte Kraft eingeleitet wird.

Die beiden Ankerplatten 7, 8 der sie verbindende Ankersteg 9 und die beiden Ankerhaken 10 jeder Ankerhälfte 6 bestehen aus einem einstückigen, abgekanteten Blechzuschnitt; die Herstellung dieser Ankerhälften und somit des gesamten Abhängerankers ist daher verhältnismäßig einfach.

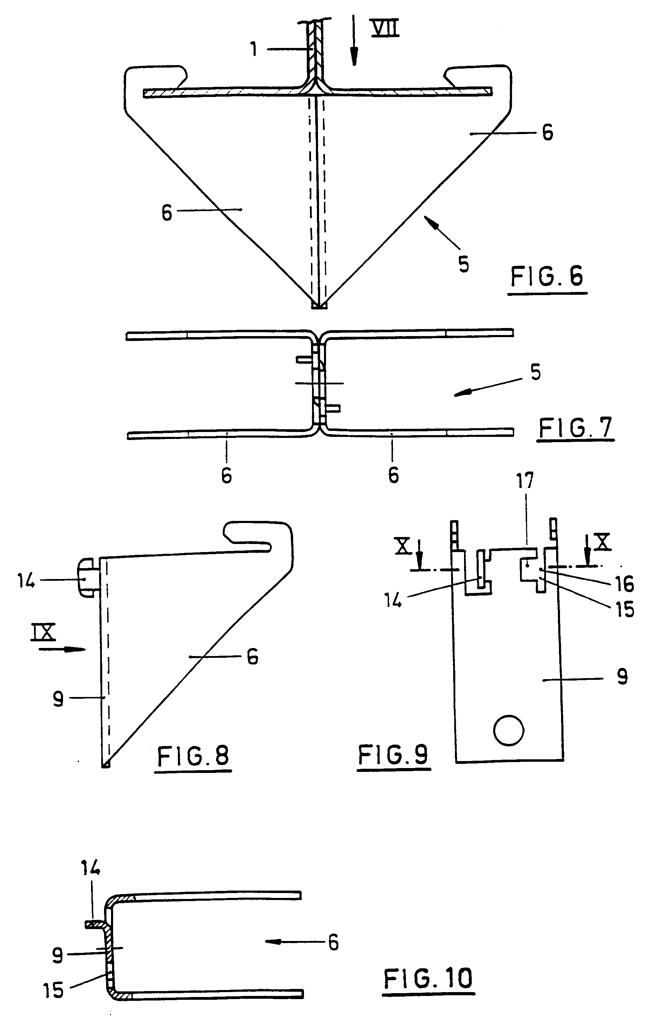

Das in den Fig. 6 bis 10 dargestellte Ausführungsbeispiel unterscheidet sich vom vorher beschriebenen Ausführungsbeispiel nur dadurch, daß bei der Montages des Abhängerankers 5 eine formschlüssige Verbindung der beiden Ankerhälften 6 ermöglicht wird, so daß die beiden Ankerhälften 6 auch schon im vormontierten, noch nicht belasteten Zustand eine Einheit bilden.

Zu diesem Zweck ist aus jedem Ankersteg 9 eine hammerkopfförmige Verriegelungslasche 14 um eine senkrechte Kante herausgebogen, die in eine Verriegelungsausnehmung 15 des jeweils anderen Ankerstegs 9 formschlüssig eingreift. Die Verriegelungsausnehmung 15 besteht aus einen an die Verriegelungslasche 14 angepassten Einführschlitz 16, der so breit und so lang ist, daß die Verriegelungslasche 14 beim Aneinanderlegen der beiden Ankerstege 9 eingeführt werden kann.

Seitlich an den Einführschlitz 16 schließt sich eine Ausklinkung 17 an (Fig. 9), die so gestaltet ist, daß ihre Ränder von der hammerkopfförmigen Verriegelungslasche 14 nach einer seitlichen Verschiebung hintergriffen werden. Auf diese Weise ist mittels beider Verriegelungslaschen 14 eine gegenseitige formschlüssige Verriegelung der beiden Ankerhälften 6 erfolgt.

## Patentansprüche

1. Abhängeranker für Doppel-T-Träger, der mit Ankerhaken (10) die entgegengesetzt gerichteten freien Kanten der in Verwendung waagerechten Profilflansche (4) des Doppel-T-Trägers umgreift, wobei der Abhängeranker zwei miteinander verbundene Ankerhälften (6) aus Blech aufweist, die jeweils mit den Ankerhaken (10) verbunden sind, wobei jede Ankerhälfte (6) zwei parallel und im Abstand zueinander angeordnete, sich im eingebauten Zustand quer zur Trägerlängsachse erstreckende Ankerplatten (7,8) aufweist, die jeweils mit einer in Verwendung waagerechten Plattenkante (11) an der Unterseite des Profilflansches (4) anliegen, wobei von einer lotrechten Plattenkante jeder Ankerplatte (7,8) senkrecht ein Ankersteg (9) abgewinkelt ist, wodurch jede Ankerhälfte (7,8) im Verwendungszustand bei horizontalem Querschnitt U-förmig ist, mit einem Krafteinleitungselement (12) zur Einleitung einer Hängerkraft, dadurch gekennzeichnet, daß die Ankerstege (9) der beiden Ankerhälften (6) aneinanderliegen und miteinander verbunden sind.

2. Abhängeranker nach Anspruch 1, dadurch gekennzeichnet, daß die beiden Ankerplatten (7,8), der sie verbindende Ankersteg (9) und die beiden Ankerhaken (10) aus einem einstückigen, abgekanteten Blechzuschnitt bestehen.

3. Abhängeranker nach Anspruch 1, dadurch gekennzeichnet, daß die Ankerstege (9) der beiden Ankerhälften (6) an ihrem vom Doppel-T-Träger (1) abgekehrten Ende jeweils miteinander fluchtende Befestigungsbohrungen (12) aufweisen.

4. Abhängeranker nach Anspruch 1, dadurch gekennzeichnet, daß aus jedem Ankersteg (9) jeweils eine Verriegelungslasche (14) herausgebogen ist, die in eine Verriegelungsausnehmung (15) des jeweils anderen Ankerstegs (9) formschlüssig eingreift.

## Claims

1. Suspension anchor for I-beams which uses anchor hooks (10) to grip round the directionally opposed free edges of the horizontal profile flange (4) of the I-beam, where the suspension anchor comprises two joined halves (6) made of metal plate, each half being connected to the anchor hooks (10), where each anchor half (6) comprises two anchor plates (7,8) which run parallel to each other and are at a distance apart and which run across the longitudinal axis of the beam in the fitted state, said anchor plates resting against a horizontal plate edge (11) on the underside of the profile flange (4), where an anchor web (9) is set at a perpendicular angle from a vertical plate edge of each anchor plate (7, 8), thereby rendering each anchor half (7, 8) U-shaped in a state of use, given a horizontal cross-section, with a force inducing element (12) to induce a suspension force, characterised in that the anchor webs (9) of the two anchor halves (6) lie alongside and are connected to each other.

2. Suspension anchor according to claim 1, characterised in that the two anchor plates (7, 8), the anchor web (9) connecting them and the two anchor hooks (10) comprise a one-piece, edged plate metal blank.

3. Suspension anchor according to claim 1, characterised in that the anchor webs (9) of the two anchor halves (6) each have flush attachment bores (12) at their end facing away from the I-beam (1).

4. Suspension anchor according to claim 1, characterised in that a locking plate (14) is bent out from each anchor web, said locking plate engaging positively in a locking recess (15) in the other anchor web (9).

## Revendications

1. Ancrage de suspension pour profilés en double T, qui enveloppe, par des crochets d'ancrage (10) , les arêtes libres opposées de la semelle (4), horizontale en service, du profilé en double T, dans lequel l'ancrage de suspension présente deux moitiés d'ancrage (6) reliées l'un à l'autre et constituées de tôle, qui sont raccordées respectivement aux crochets d'ancrage (10),chaque moitié d'ancrage (6) présente deux plaques d'ancrage (7, 8) parallèles agencées à distance l'une de l'autre et s'étendant, à l'état encastré, transversalement à l'axe longitudinal du profilé, qui s'appliquent respectivement par une arête de plaque (11), horizontale en service, sur la partie inférieure de la semelle (4) du profilé, dans lequel une arête d'ancrage (9) est coudée perpendiculairement à partir d'une arête de plaque verticale de chaque plaque d'ancrage (7, 8) et dans lequel chaque moitié d'ancrage (6), en position de service, a une forme en U en coupe transversale horizontale, avec un élément d'induction de force (12) pour induire une force de suspension, caractérisé en ce que les nervures d'ancrage (9) des deux moitiés d'ancrage (6) s'appliquent l'une sur l'autre et sont reliées l'une à l'autre.

2. Ancrage de suspension selon la revendication 1, caractérisé en ce que les deux plaques d'ancrage (7, 8), la nervure d'ancrage (9) qui les relie et les deux crochets d'ancrage (10) sont constitués d'une section de tôle d'une seule pièce repliée à arête vive.

3. Ancrage de suspension selon la revendication 1, caractérisé en ce que les arêtes nervures (9) des deux moitiés d'ancrage (6) présentent, sur leur extrémité opposée au profilé en double T (1), des alésages de fixation (12) alignés respectivement l'un sur l'autre.

4. Ancrage de suspension selon la revendication 1, caractérisé en ce que de chaque nervure d'ancrage (9) se replie respectivement une éclisse de verrouillage (14) qui s'engage avec adaptation de forme dans un évidement de verrouillage (15) de l'autre nervure d'ancrage respective (9).
